# EUROPÄISCHE PATENTSCHRIFT

(11) **EP 4 251 492 B1**
(45) Veröffentlichungstag und Bekanntmachung des Hinweises auf die Patenterteilung: **29.10.2025**
(21) Anmeldenummer: 21726856.4
(22) Anmeldetag: 11.05.2021
(51) Int. Cl.: B62B 5/00, B62B 3/02, B60R 5/04

(54) **TRANSPORT- UND VERLADEANORDNUNG UND VERFAHREN ZUM BETRIEB DER TRANSPORT- UND VERLADEANORDNUNG**
TRANSPORT AND LOADING ASSEMBLY, AND METHOD FOR OPERATING THE TRANSPORT AND LOADING ASSEMBLY
ENSEMBLE DE TRANSPORT ET DE CHARGEMENT, ET PROCÉDÉ DE FONCTIONNEMENT DE L'ENSEMBLE DE TRANSPORT ET DE CHARGEMENT

(30) Priorität: 27.11.2020 DE 102020131525
(43) Veröffentlichungstag der Anmeldung: 04.10.2023
(73) Patentinhaber: Martin, Knut, 76327 Pfinztal (DE)
(72) Erfinder: Martin, Knut, 76327 Pfinztal (DE)
(74) Vertreter: Wacker, Jost Oliver
(86) Internationale Anmeldenummer: PCT/EP2021/062472
(87) Internationale Veröffentlichungsnummer: WO 2022/111861

(56) Entgegenhaltungen:
- EP-A1- 3 020 381
- EP-A2- 1 955 894
- WO-A1-2012/175904
- DE-U1- 202019 002 940
- RU-C1- 2 646 019
- US-A- 5 649 718

## Beschreibung

Die Erfindung betrifft eine Transport- und Verladeanordnung für ein Kraftfahrzeug beziehungsweise für einen Kraftfahrzeuganhänger, wie insbesondere einen PKW mit einem sich bis zu einer Hecköffnung, wie beispielsweise in Form einer Heckklappe, einer Hecktür oder einem Kofferraumdeckel, erstreckenden Laderaum nach dem Oberbegriff des Anspruchs 1 sowie ein Betriebsverfahren für eine solche Transport- und Verladeanordnung. Der PKW kann dabei beispielsweise in Kombi-, Hochdachkombi-, SUV-, Pickup-, Van-, Minivan-, Schrägheck- oder Limousinen Bauweise oder einen Anhänger ausgeführt sein. Die Transport- und Verladeanordnung weist hierbei einen Transportwagen auf, der ein Fahrgestell mit mehreren verstellbaren Abrollmitteln umfasst, die zwischen einer Transportstellung, in der sie sich an einem Untergrund abstützen, und einer Verladestellung verstellbar sind, in der sie in Richtung der Transportaufnahme verlagert sind. Das Fahrgestell beziehungsweise der Transportwagen insgesamt kann dadurch zwischen der Transportstellung, in der der Transportwagen zum Transport von aufgenommenen Gegenständen verfahren werden kann und der Verladestellung verstellt werden, in der das Fahrgestell und/oder der Transportwagen insgesamt minimierte Außenmaße zum leichteren Verladen und Verstauen im Laderaum aufweist. Zudem weist der Transportwagen wenigstens eine feste oder abnehmbare beziehungsweise austauschbare Transportaufnahme auf. Die Transportaufnahme kann dabei beispielsweise durch einen Korb, einen Behälter, eine Kühlbox, eine Kindersitzaufnahme, eine Werkzeugaufnahme beziehungsweise den Aufbau eines Werkzeugwagens, Werkstattwagens, Handwerkerwagens und/oder eine Aufnahme für Freizeitausrüstungsgegenstände beziehungsweise eine Kombination hierausgebildet sein. Ferner weist die Transport- und Verladeanordnung eine Verladevorrichtung auf, die zur Unterbringung beziehungsweise Befestigung im Laderaum des Kraftfahrzeugs vorgesehen ist und die einen Verlademechanismus umfasst. Der Verlademechanismus dient dabei zum wenigstens teilweise selbsttätigen Einladen des Transportwagens in den Laderaum hinein und/oder zum Ausladen des Transportwagens aus dem Laderaum heraus. Dabei kann der Transportwagen am Verlademechanismus in einer Auflade-/Abladestellung aufgenommen werden, in der zwischen dem Verlademechanismus und dem Transportwagen eine in eine im Wesentlichen horizontale Verladerichtung wirkende zug- und/oder schubfeste Verbindung hergestellt ist und die Abrollmittel teilweise in die Transportstellung und teilweise in die Verladestellung verbracht werden können, in der sie beabstandet vom Untergrund gehalten sind. Hierdurch stellt die Auflade-/Abladestellung eine Art Zwischenstellung zwischen der Transportstellung und der Verladestellung des Transportwagens dar, in der dieser bereits an der Verladevorrichtung gehalten ist jedoch gleichzeitig auch noch über die in der Transportstellung verbliebenen Abrollmittel am Untergrund abgestützt ist. Auf diese Weise kann das bei Verladebeginn von der Verladevorrichtung aufzunehmende Kippmoment deutlich reduziert werden, was wiederum das Verladen von Transportwagen mit einem relativ hohen Gewicht ermöglicht.

Aus DE102015220655A1 ist ein Transport- und Verladesystem bekannt, das das Verladen von Lasten, wie insbesondere Einkäufen, leichter und bequemer machen soll. Zudem soll dabei die Notwendigkeit des üblichen Umladens der Lasten von einem Einkaufswagen in den Kofferraum vermieden werden. Hierzu weist der Transportwagen ein zusammen- und auseinanderklappbares Gestell auf. Ferner ist eine Verladeplatte vorgesehen, die aus dem Kofferraum heraus unter den Transportbehälter verfahrbar ist, um diesen aufzunehmen und selbsttätig in den Kofferraum zu verladen. Dabei wird die Platte soweit aus dem Kofferraum herausgefahren, bis sie unter dem Transportbehälter über dessen gesamte Längserstreckung reicht und anschließend angehoben. Beim Anheben klappt dabei das Fahrgestell so zusammen, dass es zusammen mit dem Transportbehälter in den Kofferraum verladen werden kann.

Nachteilig an einer derartigen Transport- und Verladeanordnung und einer entsprechenden Betriebsweise ist, dass die Verladeplatte beim Anheben des Transportbehälters einen sehr langen Hebelarm erzeugt, der insbesondere bei einem im Transportwagen aufgenommenen schweren Ladegut zu einem sehr hohen Kippmoment führt, das von der Verladevorrichtung beziehungsweise vom Kraftfahrzeug aufgenommen werden muss. Dies führt dazu, dass mittels der bekannten Transport- und Verladeanordnung nur Transportwagen mit einem relativ kleinen Gewicht verlagert werden können, beziehungsweise bei größeren Gewichten besondere Maßnahmen getroffen werden müssen, um das bei Verladen erzeugte Kippmoment aufnehmen zu können.

EP 3020381 A1 beschreibt eine Verladevorrichtung für die Fahrtrage eines Rettungsfahrzeuges. Die Verladevorrichtung weist dabei einen Faltmechanismus auf, der eine Trageaufnahme von einer schrägen Entladeposition in eine waagerechte Position führt, sobald sich die ausgebrachte Trageaufnahme unter und hinter dem Schwerpunkt der Fahrtrage befindet. An der Trageaufnahme ist dabei ein Verladeschlitten verfahrbar gehalten, mit dem die Fahrtrage verrastet werden kann, um ein motorisches Ein- und Ausladen zu ermöglichen.

RU 2 646 019 C1 zeigt eine Verladeanordnung, bei der eine in einem Kofferraum untergebrachte Verladevorrichtung einen Einkaufswagen an einem dem Pkw zugewandten Ende ergreift, hochhebt und in den Kofferraum hinein verschwenkt. Im angehobenen Zustand wird dabei zudem ein Fahrgestell des Einkaufswagens eingeklappt.

WO 2012/175904 A1 offenbart einen Einkaufswagen, dessen Transportaufnahme an der Unterseite Zusatzrollen aufweist, die auf zwei Schienen einer im Kofferraum eines Pkws aufgenommenen Verladevorrichtung aufgeschoben werden können. Im aufgeschobenen Zustand kann dann das Fahrwerk eingeklappt werden, um den Einkaufswagen mittels der Zusatzrollen auf den Schienen in den Kofferraum hinein schieben zu können.

US 5 649 718 A zeigt einen Transportwagen mit einem klappbaren Fahrgestell, der an seiner Unterseite eine Aufnahmeschiene aufweist, die auf eine Halteschiene in einem Kofferraum aufgeschoben werden kann. Beim Aufschieben werden dabei zunächst die beiden dem Pkw zugewandten Räder eingeklappt und anschließend die beiden hinteren Räder.

Die Aufgabe der Erfindung ist es, bei einer gattungsgemäßen Transport- und Verladeanordnung die genannten Nachteile zu vermeiden und mit einfachen Mitteln das Verladen von Transportwagen mit größeren Gewichten zu ermöglichen.

Diese Aufgabe wird durch eine Transport- und Verladeanordnung mit den Merkmalen des Anspruchs 1 gelöst. Dabei ist eine Sensoranordnung vorgesehen, die zwischen der Verladevorrichtung und dem Transportwagen wirkt, und in Abhängigkeit von einem Signal der Sensoranordnung die Abrollmittel selbsttätig in die Verladestellung verbringbar sind, wodurch eine besonders exakte Ausrichtung zwischen der Verladevorrichtung und dem jeweils zu verladenden Transportwagen gewährleistet werden kann.

In einer besonders vorteilhaften Ausführungsform weist der Verlademechanismus hierzu einen teilweise aus dem Laderaum heraus verlagerbaren Verladeteil auf, an dem ein wiederum gegenüber dem Verladeteil verlagerbarer Verladeschlitten vorgesehen ist, an dem die zug- und/oder schubfeste Verbindung mit dem Transportwagen herstellbar ist. Die zug- und/oder schubfeste Verbindung kann dabei durch alle bekannten und geeigneten Mittel zur Herstellung einer form- und/oder kraftschlüssigen Verbindung hergestellt werden, wie beispielsweise durch ineinandergreifende Formschlussmittel. Auf diese Weise kann der Transportwagen beziehungsweise dessen Transportaufnahme im Wesentlichen vollständig auf das Verladeteil gezogen werden, während sich der Transportwagen weiter am Untergrund abstützt. Hierdurch kann auch ein schweres in der Transportaufnahme aufgenommenes Ladegut verladen werden, ohne dass an der Verladevorrichtung ein größeres Kippmoment auftritt.

Bevorzugterweise weist das Fahrgestell wenigstens zwei Anordnungen der Abrollmittel auf, die unabhängig voneinander zwischen der Transportstellung, und der Verladestellung verstellbar sind, wodurch der am Verladeteil abgestützte Transportwagen besonders einfach in die Auflade-/Abladestellung verbracht werden kann.

Zudem ist es günstig, wenn die Abrollmittel über wenigstens eine Höhenverstellungseinrichtung zueinander höhenmäßig verstellbar sind, wodurch der am Verladeteil abgestützte Transportwagen in besonders komfortabler Weise in die Auflade-/Abladestellung verbracht werden kann und zudem eine gewünschte Ausrichtung der Transportaufnahme gegenüber der Horizontalen eingestellt werden kann.

Vorteilhafterweise weist die Höhenverstellungseinrichtung wenigstens eine Teleskopeinrichtung auf, was eine besonders exakte und stufenlose Höheneinstellung und Ausrichtung ermöglicht.

Alternativ oder zusätzlich hierzu weist die Höhenverstellungseinrichtung wenigstens einen Scherenhebeleinrichtung auf, was eine besonders stabile Höheneinstellung und Ausrichtung ermöglicht.

Bevorzugterweise kann der Verlademechanismus mittels wenigstens einer zweiten Höhenverstellungseinrichtung gegenüber dem Transportwagen selbsttätig ausgerichtet werden, um einen störungsfreien Verladevorgang gewährleisten zu können.

Ferner wird die oben genannte Aufgabe durch ein Verfahren gemäß Anspruch 9 zum Betrieb einer Transport- und Verladeanordnung in einer der oben beschriebenen Ausführungsformen gelöst, wobei zunächst der Transportwagen an die im Laderaum des Kraftfahrzeugs angebrachte Verladevorrichtung angenähert wird. Das Kraftfahrzeug ist hierzu so abgestellt, dass ein ausreichender Platz zum Rangieren und Verladen des Transportwagens im Bereich der Hecköffnung vorhanden ist. Hierfür kann am Kraftfahrzeug auch ein spezielles Assistenzsystem vorgesehen werden, das dem Fahrer den hierfür benötigten Raum im Heckbereich anzeigt beziehungsweise signalisiert. In jedem Fall wird vor, beim oder nach dem Annähern des Transportwagens zudem die Verladevorrichtung teilweise aus dem Laderaum heraus verlagert und unter der Transportaufnahme des Transportwagens angeordnet. In nachfolgenden Schritten wird dann der Transportwagen an der Verladevorrichtung aufgenommen und mittels des Verlademechanismus in Verladerichtung in den Laderaum verladen.

Hierbei wird beim Aufnehmen des Transportwagens an der Verladevorrichtung der Transportwagen unter Herstellung einer in Verladerichtung wirkenden zug- und/oder schubfesten Verbindung, in einem dem Kraftfahrzeug zugewandten randseitigen Bereich in Gravitationsrichtung am Verladeteil abgestützt, wobei die Verladerichtung im Wesentlichen horizontal gerichtet ist. Hierzu kann der Transportwagen auf den entsprechenden Bereich des Verladeteils abgelassen und/oder das Verladeteil an die Unterseite des Transportwagens angehoben werden. Zusätzlich werden die dem Kraftfahrzeug zugewandten Abrollmittel in die Auflade-/Abladestellung verbracht. Auf diese Weise wird der Transportwagen zu Beginn des Verladevorganges am Verladeteil nur teilweise nach unten abgestützt und zusätzlich in Verladerichtung verbunden. Durch das zusätzliche Verlagern der dem Kraftfahrzeug zugewandten Abrollmittel, ist der Transportwagen in der Auflade-/Abladestellung bereit, um in den Laderaum verlagert zu werden, wobei er sich jedoch nach wie vor am Untergrund abstützt. Auf diese Weise wird insbesondere zu Beginn des Verladevorganges, wenn der Transportwagen den größten Abstand zur Verladevorrichtung aufweist, eine Beaufschlagung der Verladevorrichtung mit einem größeren Kippmoment verhindert, so dass auch Transportwagen mit einem relativ großen Gewicht problemlos verladen werden können.

Dabei ist es günstig, wenn der Transportwagen in der Auflade-/Abladestellung mittels des Verladeschlittens auf das Verladeteil des Verlademechanismus gezogen wird und dabei über die vom Kraftfahrzeug abgewandten Abrollmittel am Untergrund abrollt. Hierdurch kann der Transportwagen bereits in den Laderaum hinein verlagert werden, während er sich mit den vom Fahrzeug abgewandten Abrollmitteln noch immer am Untergrund abstützt. Auf diese Weise kann die Beaufschlagung der Verladevorrichtung mit einem größeren Kippmoment während des gesamten Verladevorganges verhindert werden.

Vorteilhafterweise wird nach Erreichen einer Stützstellung, in der das Gewicht der Transportaufnahme vollständig auf dem Verladeteil abgetragen ist, und vor Unterschreitung eines Mindestabstandes gegenüber dem Kraftfahrzeug auch die vom Kraftfahrzeug abgewandten Abrollmittel in die Verladestellung verbracht. Hierdurch ist es möglich, die abstützende Wirkung der Abrollmittel solange zur Verfügung zu stellen, bis die dem Kraftfahrzeug abgewandten Abrollmittel eingefahren werden müssen, um einen Kontakt mit dem Kraftfahrzeug zu vermeiden. Auf diese Weise können die während des Verladevorganges aufzunehmenden Kippmomente auf ein Minimum reduziert werden.

Ferner ist es günstig, wenn der Transportwagen nach dem Verbringen aller Abrollmittel in die Verladestellung auf dem Verladeteil in eine Fixierstellung im Laderaum verbracht wird, in der er in alle Richtungen positionsstabil gesichert ist. Hierdurch kann ein positionsstabiler und geräuscharmer Transport des Transportwagens im Kraftfahrzeug gewährleistet werden.

Ferner ist es von Vorteil, wenn zusätzlich die Verladevorrichtung eine zweite Höhenverstellungseinrichtung aufweist, wodurch auch diese insbesondere gegenüber dem zu verladenden Transportwagen höhenmäßig eingestellt und ausgerichtet werden kann.

Vorteilhafterweise werden bei einem Entladevorgang des Transportwagens aus dem Laderaum heraus nach Erreichen des Mindestabstandes die vom Kraftfahrzeug abgewandten Abrollmittel selbsttätig in die Transportstellung verbracht und der Transportwagen wird mittels des Verladeschlittens aus dem Laderaum herausgeschoben. Auf diese Weise kann auch beim Entladen des Transportwagens aus dem Laderaum heraus das an der Verladevorrichtung aufzunehmende Kippelement auf ein Minimum reduziert werden.

Ferner ist es günstig, wenn die vom Kraftfahrzeug abgewandten Abrollmittel beim Aufsetzen auf den Untergrund höhenmäßig gegenüber der Transportaufnahme fixiert werden und der Transportwagen dadurch in die Auflade-/Abladestellung verbracht ist. Beispielsweise können hierbei Sensoren oder Druckschalter verwendet werden, die erkennen, wann die betreffenden Abrollmittel auf dem Untergrund aufsetzen, so dass diese in der jeweiligen Höhe fixiert werden können. Hierdurch kann der Transportwagen auch beim Abladen auf die geeignete Höhe eingestellt werden.

In den Figuren ist eine beispielhafte Ausführungsform der Erfindung dargestellt. Es zeigen:
- Figur 1: eine Seitenansicht einer erfindungsgemäßen Transport- und Verladeanordnung,
- Figur 2: eine rückseitige Ansicht der Transport- und Verladeanordnung nach Figur 1,
- Figur 3: eine Draufsicht auf die Transport- und Verladeanordnung nach Figur 1,
- Figur 4: eine Draufsicht auf eine alternative Ausführungsform der Transport- und Verladeanordnung mit einer zweiteiligen Transportaufnahme,
- Figur 5: eine rückseitige explodierte Ansicht einer Verladevorrichtung der Transport- und Verladeanordnung und
- Figur 6: eine rückseitige Ansicht der Verladevorrichtung der Transport- und Verladeanordnung bei abgenommenem Verlademechanismus
- Figur 7: eine Ansicht eines Teiltransportwagens und
- Figuren 8A bis 8F: Ansichten der Verladeanordnung nach Figur 1 in verschiedenen Zeitpunkten während eines Verladevorganges

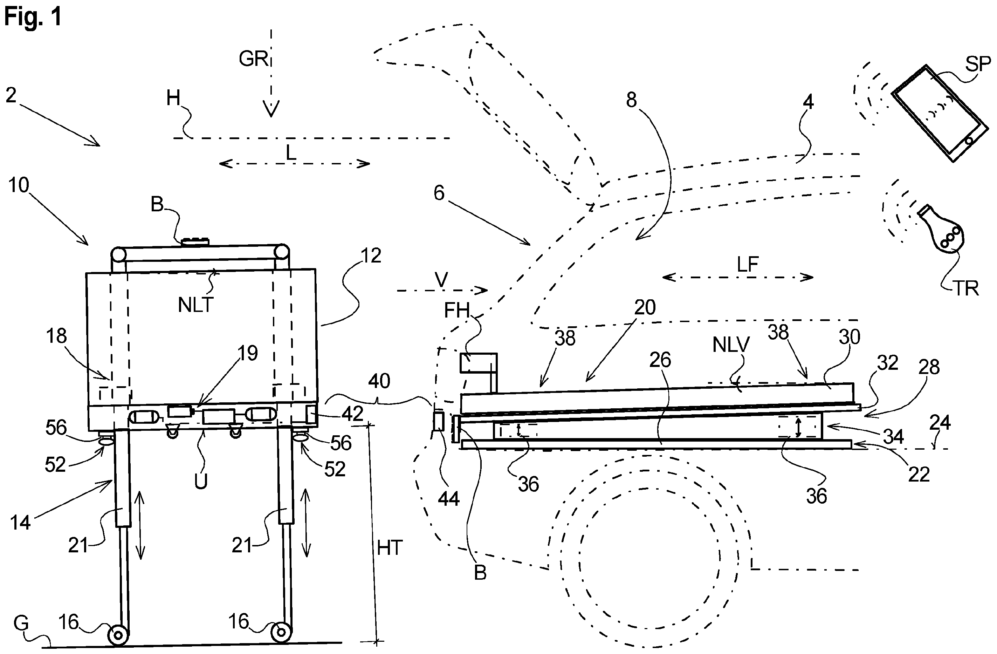

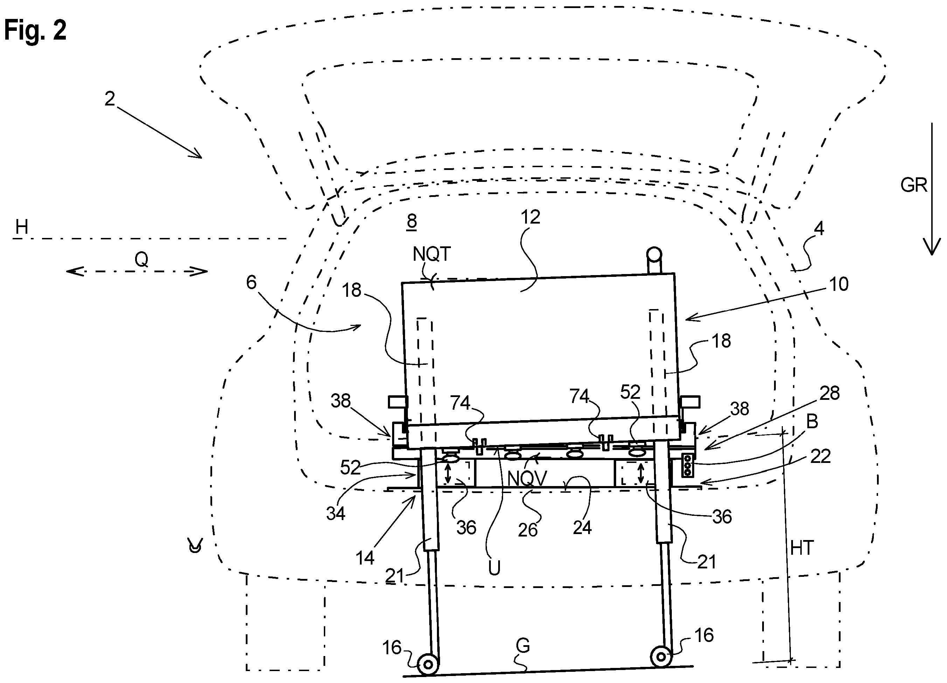

Die Figuren 1 und 2 zeigen eine Transport- und Verladeanordnung 2 für ein Kraftfahrzeug 4 in beispielhafter Form eines PKW in SUV-Bauweise mit einem über eine Hecköffnung 6 zugänglichen Laderaum 8.

Die Transport- und Verladeanordnung 2 weist dabei einen Transportwagen 10 mit einer Transportaufnahme 12 auf, die insbesondere abnehmbar an einem Fahrgestell 14 mit beispielsweise vier Abrollmitteln 16 gehalten ist. Alternativ hierzu kann das Fahrgestell 14 auch dauerhaft in die Transportaufnahme 12 integriert sein. Die Abrollmittel 16 können dabei als Einfachrollen oder alternativ hierzu auch als paarweise angeordnete Rollen oder als Mehrfachrollen ausgebildet sein und sind dabei vorzugsweise gefedert am Fahrgestell gehalten. In jedem Fall sind die Abrollmittel 16 über das Fahrgestell 14 zwischen einer dargestellten Transportstellung und einer Verladestellung verstellbar. In der Transportstellung kann der Transportwagen 10 über die Abrollmittel 16 an einem Untergrund G abgestellt und verfahren werden. In der Verladestellung ist das Fahrgestell 14 an der Transportaufnahme 12 angelegt beziehungsweise wenigstens teilweise in eine an der Transportaufnahme 12 vorgesehene Fahrgestellaufnahme 18 hinein verlagert oder wenigstens teilweise von der Transportaufnahme 12 entfernt. Hierdurch steht der Transportwagen 10 mit verringerten Außenabmessungen für einen Verladevorgang zur Verfügung.

Beispielsweise kann das Fahrgestell 14 hierzu, wie dargestellt, eine Höhenverstellung 19 mit elektrisch betriebenen Teleskopeinrichtungen 21 aufweisen, über die ein jeweiliger Abstand A der Abrollmittel 16 gegenüber der Transportaufnahme 12 beziehungsweise gegenüber der Fahrgestellaufnahme 18 einstellbar ist. Zusätzlich oder alternativ zu den Teleskopeinrichtungen 21 kann die Höhenverstellung 19 auch alle anderen bekannten und geeigneten Mittel zur Einstellung des Abstandes der Abrollmittel 16 gegenüber der Transportaufnahme 12 aufweisen, wie beispielsweise Klappmittel, eine Scherenhebeleinrichtung oder einen Spindelantrieb, beziehungsweise eine Kombination hieraus.

Sowohl die Transportaufnahme 12 als auch das Fahrgestell 14 können aus allen für die Herstellung von Transportwagen 10 bekannten und geeigneten Materialien hergestellt sein. Insbesondere können sie wenigstens teilweise aus einem Metall-, Kunststoff-, Glas- oder Kohlefasermaterial beziehungsweise aus Kombinationen hieraus hergestellt sein.

Zudem weist die Transport- und Verladeanordnung 2 eine Verladevorrichtung 20 auf, die über eine Lagereinrichtung 22 im Laderaum 8 festgelegt werden kann. Die Lagereinrichtung 22 weist hierzu beispielhaft eine an einem Laderaumboden 24 fixierbare Bodenplatte 26 auf. Deren Fixierung mit dem Laderaumboden 24 kann dabei entweder dauerhaft durch eine Schweißverbindung mit dem Laderaumboden 24 erfolgen. Alternativ hierzu kann die Bodenplatte 26 auch lösbar mit dem Laderaumboden 24 verbunden sein, wie beispielsweise durch eine Schraubverbindung oder durch Verspannen der Bodenplatte 26 an beliebigen Befestigungseinrichtungen des Kraftfahrzeugs 4 (nicht dargestellt).

Die Verladevorrichtung 20 weist ferner einen Verlademechanismus 28 auf, der ein zumindest teilweise selbsttätiges Ein- und Ausladen des Transportwagens 10 in beziehungsweise aus dem Laderaum 8 des Kraftfahrzeugs 4 ermöglicht. Hierzu weist der Verlademechanismus 28 ein aus dem Laderaum 8 heraus ausfahrbares Verladeteil 30 auf, wie beispielsweise eine Platte, einen Träger- oder Teleskoparm oder eine Schiene, wobei das Verladeteil 30 verlagerbar an einem Träger 32 des Verlademechanismus 28 gehalten ist.

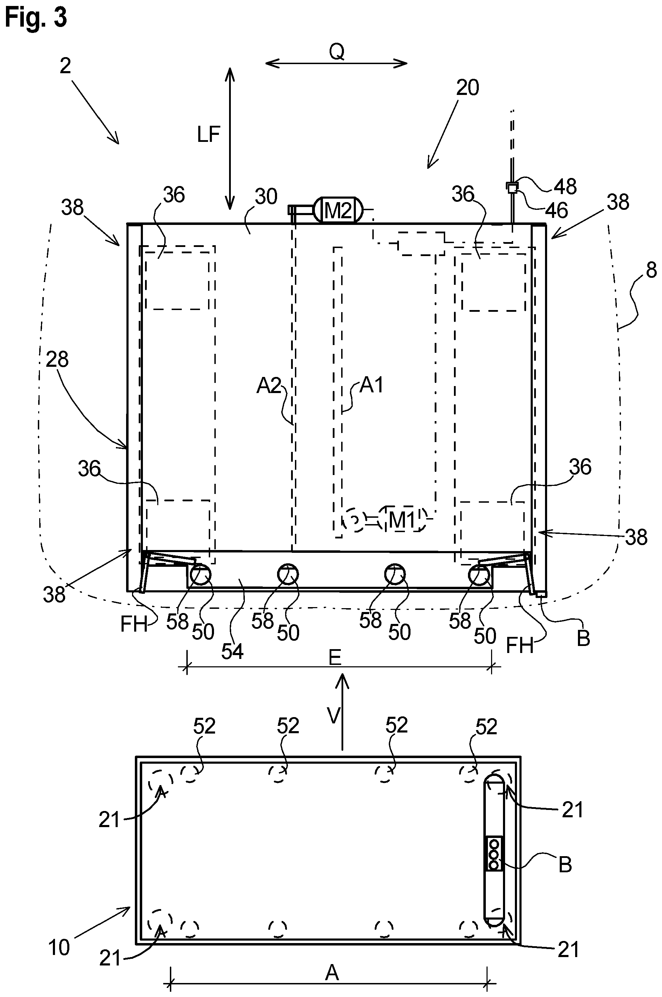

Zwischen dem Verlademechanismus 28 und der Bodenplatte 26 ist ferner eine zweite Höhenverstellungseinrichtung 34 vorgesehen. Diese weist beispielhaft vier unabhängig voneinander verstellbare Hubelemente 36 auf, die gemäß Figur 3 an vier Eckbereichen des Verlademechanismus 28 angreifen. Die Hubelemente können dabei jede bekannte und geeignete Form aufweisen und beispielsweise kolbenförmig, als Scherenhebelantrieb, als Spindelantrieb oder durch Kombinationen hieraus gebildet sein.

Durch die zweite Höhenverstellungseinrichtung 34 sind somit vier Höhenverstellungsbereiche 38 beziehungsweise alle Ecken des Verlademechanismus 28 zueinander einstellbar, wodurch der Träger 32 beziehungsweise der Verlademechanismus 28 insgesamt gegenüber der Horizontalen H beziehungsweise gegenüber dem Transportwagen 10 ausgerichtet werden kann. Je nach Bauform der zweiten Höhenverstellungseinrichtung 34 können hierbei alternativ auch nur drei Höhenverstellungsbereiche 38 vorgesehen werden. Ferner kann der Verlademechanismus 28 beziehungsweise der Träger 32 an einem Kugelgelenk gelagert und über beliebige Verlagerungsmittel in eine gewünschte Ausrichtung verstellbar sein, wie durch Beaufschlagung mit Druck- oder Zugkräften oder mit einem Moment (nicht dargestellt).

Bezüglich einer Längserstreckung LF des Kraftfahrzeuges 4 gemäß Figur 1 kann die Ausrichtung dabei sowohl in Längsrichtung L als auch vertikal dazu in Querrichtung Q erfolgen. Hierdurch ist es möglich, den Verlademechanismus 28 gegenüber der Horizontalen H in einem ersten Neigungswinkel NLV in Längsrichtung L, gemäß Figur 1, sowie in einem zweiten Neigungswinkel NQV in Querrichtung Q, gemäß Figur 2, auszurichten. Der Neigungswinkel NLV in Längsrichtung L kann dabei insbesondere in Abhängigkeit einer aktuellen Höhe HT der Transportaufnahme 12 und/oder eines Neigungswinkels NLT des Transportwagens 10 in Längsrichtung L eingestellt werden, während der Neigungswinkel NQV an einen Neigungswinkel NQT des Transportwagens 10 in Querrichtung Q angepasst wird. Durch diese Ausrichtung des Verlademechanismus 28 gegenüber dem zu verladenden Transportwagen 10 kann ein ungestörter und zumindest teilweise selbsttätiger Verladevorgang ermöglicht werden.

Zur selbsttätigen Ausrichtung des Verlademechanismus 28 gegenüber der Position des Transportwagens 10 beziehungsweise zur Anpassung wenigstens eines Neigungswinkels NLV, NQV des Verlademechanismus an wenigstens einen Neigungswinkel NLT, NQT des Transportwagens 10 kann gemäß Figur 1 zudem eine Sensoranordnung 40 vorgesehen sein, die erste Sensormittel 42 am Transportwagen 10 und zweite Sensormittel 44 am Kraftfahrzeug 4 beziehungsweise an der Verladevorrichtung 20 aufweist. Die beiderseitigen Sensormittel 42, 44 wirken dabei in der Weise zusammen, dass sie die gegenseitige Position und Ausrichtung der Transportaufnahme 12 und des Verlademechanismus 28 zueinander erfassen und ein Signal an die zweite Höhenverstellungseinrichtung 34 weitergeben. Die Sensormittel 42, 44 können hierzu jede bekannte und geeignete Sensorik aufweisen, wie beispielsweise eine, Neigungs-, Kontakt-, Abstands- oder sonstige Sensorik.

Mittels des weitergegebenen Signals kann die zweite Höhenverstellungseinrichtung 34 derart angesteuert werden, dass der Verlademechanismus 28 entsprechend der Position und/oder wenigstens eines der Neigungswinkel NLT, NQT des Transportwagens 10 so ausgerichtet wird, dass das Verladeteil 30 in eine geeignete Position zum Verladen des Transportwagens 10 eingestellt werden kann.

Die Ausrichtung erfolgt dabei derart, dass das herausfahrbare Verladeteil 30 so am Transportwagen 10 positioniert wird, dass dieser beziehungsweise dessen Transportaufnahme 12 am Verladeteil 30 aufgeladen beziehungsweise zur selbsttätigen Durchführung des Verladevorganges mit diesem form- und/oder kraftschlüssig verbunden werden kann.

Hierbei kann zusätzlich auch die Höheneinstellung 19 genutzt werden, um eine für den Verladevorgang geeignete Transportwagenhöhe HT beziehungsweise einen geeigneten Neigungswinkel NLT, NQT des Transportwagens 10 einzustellen beziehungsweise um einen Formschluss zwischen dem Transportwagen 10 und dem Verladeteil 30 insbesondere selbsttätig herzustellen oder zu trennen.

Alternativ zur Ausrichtung des Verlademechanismus 28 kann die zweite Höhenverstellungseinrichtung 34 auch ausschließlich zur vertikalen Verstellung der Verladevorrichtung 20 zwischen einer am Laderaumboden 24 angenäherten Passivstellung und einer hierzu erhöhten Betriebsstellung dienen.

Die zweite Höhenverstellungseinrichtung 34 ist in jedem Fall elektrisch betrieben und weist hierzu gemäß Figur 3 elektrische Anschlussmittel 46 auf, die mit fahrzeugseitigen Anschlussgegenmitteln 48 elektrisch verbunden werden können, um die Versorgung mit der benötigten elektrischen Energie zur Verfügung zu stellen.

Sowohl die zweite Höhenverstellungseinrichtung 34 der Verladevorrichtung 20 als auch die Höhenverstellung 19 des Transportwagens 10 kann zudem durch Bedienmittel B aktiviert/deaktiviert beziehungsweise gesteuert werden, die direkt an der Verladevorrichtung 20 beziehungsweise am Transportwagen 10 gehalten sind. Alternativ oder zusätzlich hierzu können zudem auch mobile Bedienmittel in Form eines Transponders TR oder eines Smartphones SP verwendet werden, wie in Figur 1 dargestellt. Ferner können über die Bedienmittel B, den Transponder TR und/oder das Smartphone S auch die Abrollmittel 16 in einem bestimmten Abstand zur Transportaufnahme 12 fixiert werden.

Darüber hinaus sind gemäß Figur 3 an der Verladevorrichtung 20 Eingriffsmittel 50 vorgesehen, die eine zug- und/oder schubfeste Verbindung mit dem Transportwagen 10 ermöglichen. Hierzu kann mittels der Eingriffsmittel 50 beispielsweise eine formschlüssige Verbindung mit Eingriffsgegenmitteln 52 des Transportwagens 10 hergestellt werden.

Wie in Figur 3 dargestellt, sind die Eingriffsmittel 50 am Verladeteil 30 angebracht und können zusammen mit diesem motorisch aus dem Laderaum 8 hinaus und in den Laderaum hinein verlagert werden, wie beispielsweise durch einen Antriebsmotor M1, der an einem mit dem Verladeteil 30 verbundenen Antriebselement A1, wie beispielsweise einer Zahnstange, angreift. Zudem sind die Eingriffsmittel 50 dabei an einem Verladeschlitten 54 vorgesehen, der wiederum gegenüber dem Verladeteil 30 motorisch verlagert werden kann, wie beispielsweise durch einen Antriebsmotor M2, der an einem mit dem Verladeschlitten 54 verbundenen Antriebselement A2, wie beispielsweise einem Riemenantrieb, angreift.

Die Eingriffsgegenmittel 52 sind durch Formschlussmittel gebildet, die, wie in den Figuren 1 und 2 dargestellt, an einer Unterseite U des Transportwagens 10 vorgesehen sind. Diese sind in Form und Größe zur Herstellung eines Formschlusses mit den Eingriffsmitteln 50 angepasst und weisen, gemäß Figur 1, einen Hinterschnitt 56 auf, der von einem Sicherungsriegel 58 der Eingriffsmittel 50, gemäß Figur 3, hintergriffen werden kann, um einen hergestellten Formschluss insbesondere in vertikaler Richtung gegen unbeabsichtigtes Trennen zu sichern. Der Sicherungsriegel 58 kann dabei manuell, teil- oder vollautomatisch zwischen einer Freigabe- und einer Verriegelungsstellung verstellbar sein.

Gemäß der Darstellung sind die Eingriffsgegenmittel 52 hierbei als männliche Formschlussmittel ausgeformt, die in die als weibliche Formschlussmittel ausgeformten Eingriffsmittel 50 eingreifen können. Alternativ hierzu können auch die Eingriffsmittel 50 als männliche Formschlussmittel und die Eingriffsgegenmittel 52 als weibliche Formschlussmittel ausgebildet sein. Als weitere alternative Ausführungsform können die Eingriffsgegenmittel 52 jedoch auch durch bestehende beziehungsweise integrierte Bereiche oder Teile des Transportwagens 10 gebildet sein, die eine zug- und/oder schubfeste Verbindung mit den entsprechend angepassten Eingriffsmitteln 30 der Verladevorrichtung 20 ermöglichen.

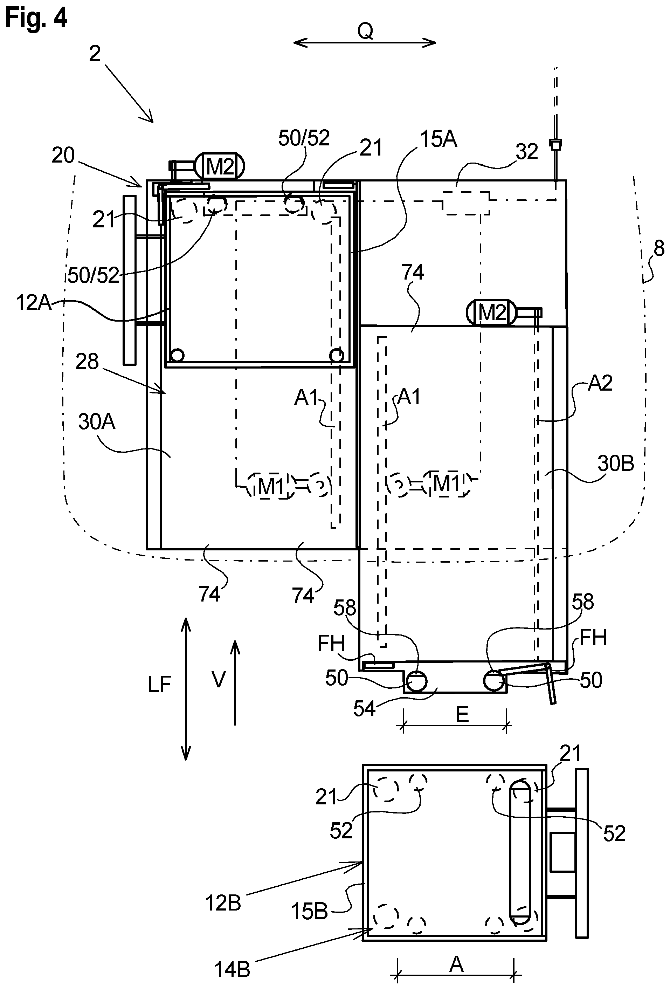

Figur 4 zeigt eine alternative Ausführungsform der Transport- und Verladevorrichtung 2, bei der der Verlademechanismus 28 zwei voneinander unabhängig ausfahrbare Verladeteile 30A, 30B und der Transportwagen 10 wenigstens zwei trennbare/verbindbare Teilaufnahmen 12A, 12B sowie zwei trennbare/verbindbare Fahrgestellteile 14A/14B aufweist. Dadurch ist es möglich, wie in Figur 4 dargestellt, nur einen der Verladeteile 30B aus dem Laderaum 8 heraus zu verlagern und dadurch die betreffende Teilaufnahme 12B sowie das zugehörige Fahrgestellteil 14B von der auf dem jeweils anderen Verladeteil 30A lagernden Teilaufnahme 12A und dem zugehörigen Fahrgestellteil 14B zu trennen.

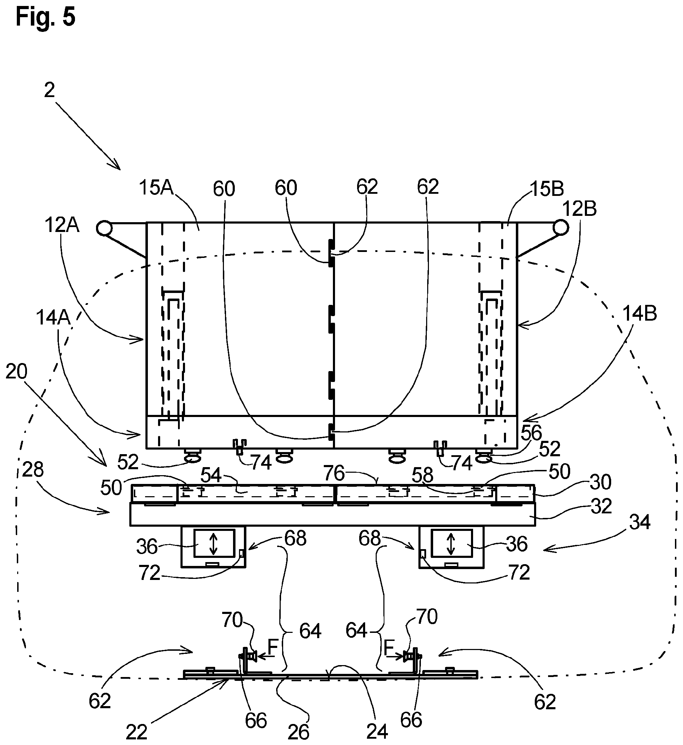

Sowohl die beiden Teilaufnahmen 12A, 12B wie auch die beiden Fahrgestelle 14A, 14B weisen hierzu, wie aus Figur 5 zu entnehmen ist, Verbindungsmittel 60 und Verbindungsgegenmittel 62 auf, die an einem ersten Wandungsteil 15A der ersten Teilaufnahme 12A und an einem zweiten Wandungsteil 15B der zweiten Teilaufnahme 12B so geformt sind, dass sie durch relative horizontale Verlagerung zueinander ineinandergeschoben werden können, um eine formschlüssige Verbindung herzustellen. Die bestehende formschlüssige Verbindung kann durch relative horizontale Verlagerung zudem auch wiederum gelöst werden, um die beiden Teilaufnahmen 12A, 12B separat voneinander verwenden zu können.

Wie aus Figur 5 ferner zu entnehmen ist, kann der Verlademechanismus 28 abnehmbar an der Bodenplatte 26 gehalten sein, so dass dieser aus dem Laderaum 8 entnommen werden kann, wenn er nicht benötigt wird, während die Bodenplatte 26 dauerhaft im Laderaum 8 des Kraftfahrzeugs 4 verbleiben kann. Durch das Entfernen des Verlademechanismus 28 kann somit ein größeres Ladevolumen für sonstiges Transportgut freigegeben werden.

Gemäß Figur 5 ist hierzu an der Verladevorrichtung 20 zwischen der Bodenplatte 26 und dem Verlademechanismus 28 eine trennbare Befestigungseinrichtung 64 vorgesehen. Diese weist an der Bodenplatte 26 Befestigungsmittel 66 auf, die mit Gegenbefestigungsmitteln 68 des Verlademechanismus 28 lösbar verbunden werden können. Die verbindbaren/trennbaren Befestigungsmittel 66 und Gegenbefestigungsmittel 68 können dabei jede bekannte und geeignete lösbare Verbindungsform bilden, wie beispielsweise eine Rast-, Verriegelungs- oder Schraubverbindung.

Gemäß der beispielhaften Ausführungsform von Figur 5 weisen die Befestigungsmittel 66 zwei jeweils durch eine Federkraft F vorgespannt gelagerte Rastbolzen 70 auf, die beim Aufsetzen des Verlademechanismus 28 auf die Bodenplatte 26 jeweils in eine durch die Gegenbefestigungsmittel 68 gebildete Rastaufnahme 72 des Verlademechanismus 28 verlagerbar sind. Zum Trennen der Befestigungseinrichtung 64 werden die beiden Rastbolzen 70 entgegen der Federkraft F aus der Rastaufnahme 72 heraus verlagert, um die jeweilige Rastverbindung aufzuheben.

Um auch bei einem hohen Transportgewicht des Transportwagens 10 einen störungsfreien Verladevorgang in den Laderaum 8 hinein zu gewährleisten, können an der Unterseite U der Transportaufnahme 12 und/oder an der Oberseite des Verladeteils 30 zusätzliche Abstützmittel 74 vorgesehen sein, wie aus Figur 5 zu entnehmen ist. Diese Abstützmittel 74 können beispielsweise in Form von Rollen, Walzen oder Gleitlagern ausgebildet sein, die an einer sich in Verladerichtung V erstreckenden Abstützfläche 76 des jeweils anderen Teils verlagerbar sind, wie aus den Figuren 3 und 4 zu entnehmen ist. Alternativ hierzu kann sich die Unterseite U der Transportaufnahme 12 beim Verladen auf das Verladeteil 30 auch flächig auf diesem abstützen.

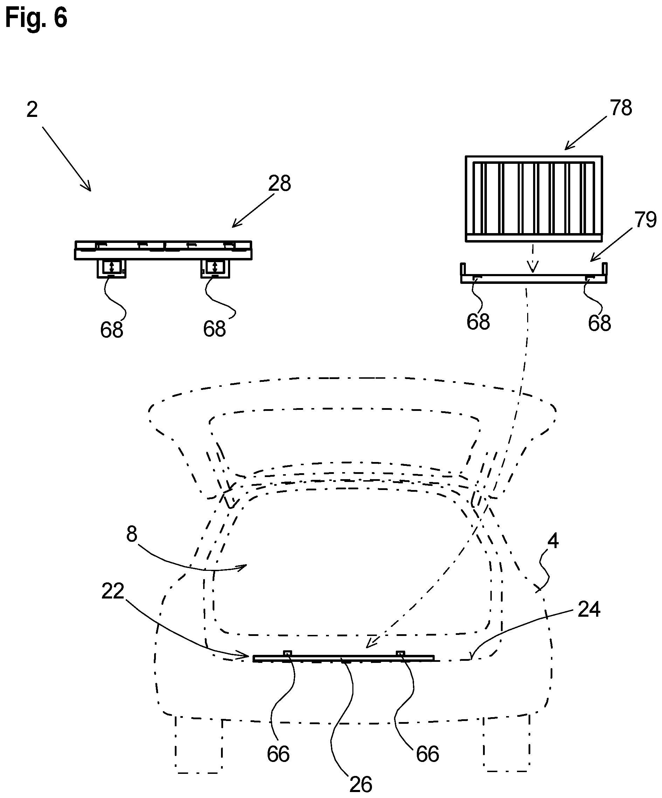

Wie in Figur 6 dargestellt kann der Laderaum 8 nach entfernen des Verlademechanismus 28 auch für eine sonstige Fahrzeugausstattungseinrichtung 78 zur Verfügung gestellt werden, wie beispielsweise für eine Hundebox, ein Sportgerät, ein Ersatzrad und/oder einen Werkzeugkoffer oder ähnliches. Zur Befestigung dieser sonstigen Fahrzeugausstattungseinrichtung 78 anstelle des Verlademechanismus 28 weist diese entweder selbst die benötigten Gegenbefestigungsmittel 68 auf oder wird über einen passenden Adapter 79 befestigt, an dem zum Einen die Fahrzeugausstattungseinrichtung 78 fixiert werden kann und der zum Anderen auch die Gegenbefestigungsmittel 68 aufweist, wie in Figur 6 beispielhaft für eine Hundebox dargestellt.

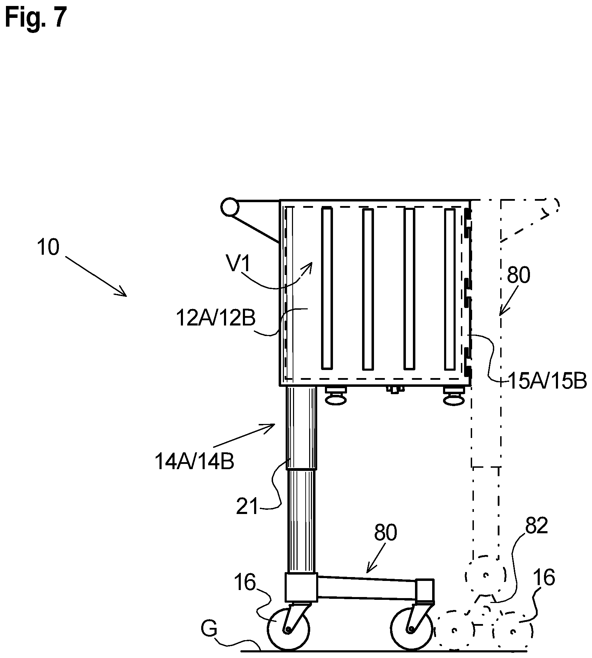

Gemäß Figur 7 kann durch die zweiteilige Ausbildung sowohl des Transportwagens 10 als auch des Verlademechanismus 28 und durch Trennen der Wandungsteile 15A, 15B auch nur ein Teil des Transportwagens 10 bereitgestellt werden, wie beispielsweise für einen kleineren Warentransport oder Einkauf. Um hierbei auch bei dem Teilwagen eine stabile Standfähigkeit gegenüber dem Untergrund G gewährleisten zu können, kann an dem betreffenden Fahrgestellteil 14B zudem ein Stützfahrgestell 80 vorgesehen sein, das beispielsweise ausfahrbar, ausklappbar oder in einer strichpunktiert dargestellten, alternativen Ausführungsform abnehmbar am Fahrgestellteil 14B gehalten ist. Auch hier können die Abrollmittel 16 als Einfachrollen oder alternativ hierzu auch als paarweise angeordnete Rollen oder als Mehrfachrollen ausgebildet sein.

Darüber hinaus können die Abrollmittel 16, wie dargestellt, an einem in vertikaler Ebene verdrehbaren Zwischengestell 82 gehalten sein, das über Treppenstufen hinweg verdreht werden kann und dadurch eine Art Treppensteighilfe bildet. Die Treppensteighilfe kann dabei wie dargestellt nur an einer Seite des Transportwagens 10 vorgesehen sein, um diesen, insbesondere in Schrägstellung händisch oder motorisch über eine Treppe hinwegbewegen zu können.

Alternativ hierzu kann die Treppensteighilfe auch an voneinander abgewandten Stirnseiten des Transportwagens 10 vorgesehen sein und zusätzlich mit der Höhenverstellungseinrichtung 19 des Fahrgestells 14 verbunden sein. Hierdurch kann der Transportwagen 10, insbesondere motorisch über Treppenstufen hinweg verlagert werden, wobei die Teleskopeinrichtungen 21 der Höhenverstellung 19 dabei derart zueinander eingestellt werden, dass die Transportaufnahme 12 im Wesentlichen horizontal ausgerichtet bleibt.

In einer weiteren alternativen Ausführungsform können die Treppensteighilfen auch derart ausgeführt sein, dass sie bedarfsweise an die Abrollmittel beziehungsweise an Stelle der Abrollmittel 16 am Fahrgestell 14 angebracht beziehungsweise aufgesteckt werden können (nicht dargestellt). Dabei können die Treppensteighilfen nur an einer Teleskopeinrichtung oder an einer beliebigen Anzahl von Teleskopeinrichtungen angebracht werden.

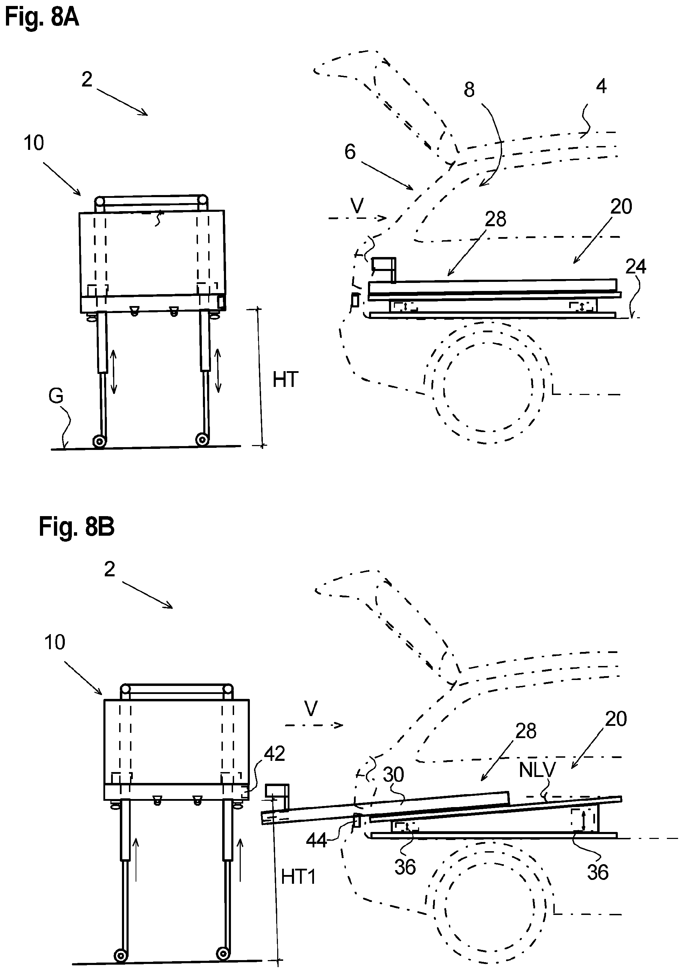

Vor Beginn eines Verladevorganges befindet sich der Transportwagens 10 gemäß Figur 8A in seiner Transportstellung mit der Höhe HT, die zum Verfahren auf dem Untergrund G geeignet ist, wie beispielsweise während eines Einkaufs oder eines sonstigen manuellen Transports von Transportgut. Die Verladevorrichtung 20 befindet sich zu diesem Zeitpunkt beispielsweise noch in der Passivposition, in der der Verlademechanismus 28 im Laderaum 8 möglichst nahe am Laderaumboden 24 positioniert ist.

Zu Beginn des Verladevorganges wird der Transportwagen 10 in einem ersten Schritt gemäß Figur 8B an das Kraftfahrzeug 4 beziehungsweise dessen Verladevorrichtung 20 in Verladerichtung V angenähert. Durch Ansteuerung über das Bedienteil B, den Transponder TR, das Smartphone SP oder durch selbsttätige Aktivierung über ein entsprechendes Signal der Sensoranordnung 40 wird vor, während oder nach dem Annähern des Transportwagens 10 zudem die Verladevorrichtung 20 aktiviert. Dabei verlagern die Hubelemente 36 den Verlademechanismus 28 in die dargestellte Betriebsposition mit einem jeweils geeigneten Neigungswinkel NLV beziehungsweise einer geeigneten Höhe gegenüber dem Laderaumboden 28, in der das Verladeteil 30 aus dem Laderaum 8 heraus verlagert werden kann. Hierbei erfassen die Sensormittel 42, 44 die Position und Ausrichtung des Transportwagens 10 gegenüber der Verladevorrichtung 20. In Abhängigkeit vom Signal der Sensoranordnung 40 wird dabei am Transportwagen 10 eine für die Anlage am Verladeteil 30 geeignete Höhe HT1 eingestellt.

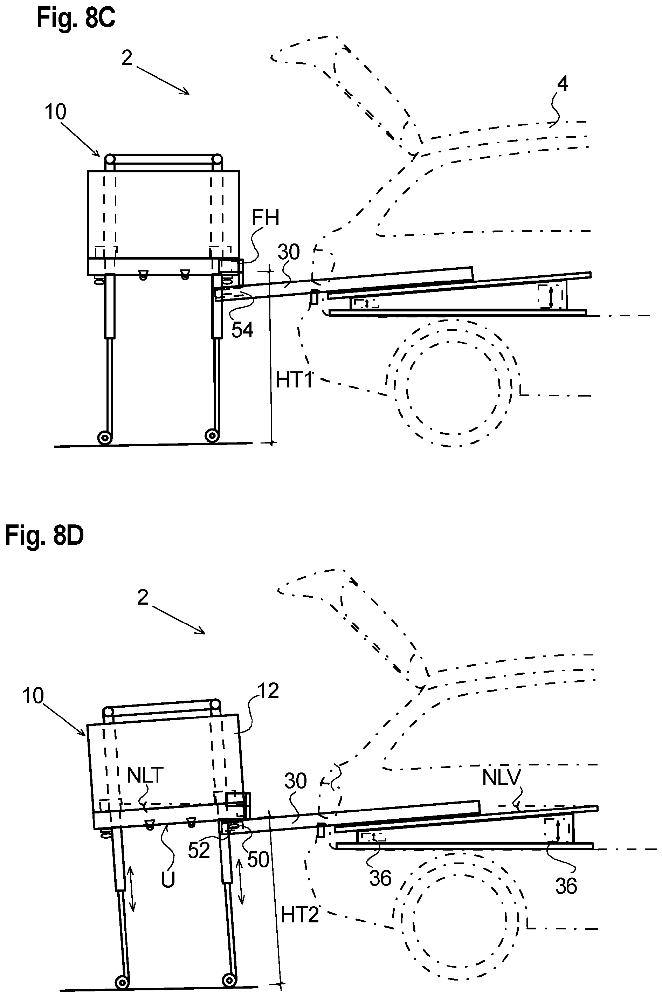

Mit dieser eingestellten Höhe HT1 wird der Transportwagen 10 in einem zweiten Schritt gemäß Figur 8C an das Verladeteil 30 angelegt. Dabei kann der Transportwagen 10 beispielsweise über winkelförmige Führungshilfen FH ausgerichtet werden, die horizontal verschwenkbar an dem Verladeschlitten 54 gehalten sind und dadurch die dem Kraftfahrzeug 4 zugewandten Ecken des Transportwagens 10 umgreifen. Hierbei werden gleichzeitig die Eingriffsmittel 50 des Verladeschlittens 54 unterhalb der Eingriffsgegenmittel 52 angeordnet. Das ausfahrbare Verladeteil 30, 30A, 30B kann hierzu, wie aus Figur 3 und 4 zu entnehmen ist, eine seitliche Erstreckung E aufweisen, die geringer ist als ein Abstand A zwischen den Abrollmitteln 16 des jeweiligen Transportwagens 10.

In einem dritten Schritt gemäß Figur 8D wird dann der Transportwagen 10 aus der Höhe HT1 auf eine geringere Höhe HT2 abgesenkt, in der die Transportaufnahme 12 auf das Verladeteils 30, 30A, 30B aufgesetzt wird und die Eingriffsmittel 50 mit den Eingriffsgegenmitteln 52 in die formschlüssige Verbindung verbracht werden. Durch Verstellen des Sicherungsriegels 58 kann der hergestellte Formschluss dabei zusätzlich auch nach oben gesichert werden. Alternativ zum dargestellten Absenken des Transportwagens 10 auf das Verladeteil 30 kann letzteres mittels der Hubelemente 36 beziehungsweise durch Verstellen des Neigungswinkels NLV auch in Anlage an die Unterseite U des Transportwagens 10 angehoben werden. Zudem kann hierbei, wie dargestellt, auch die Neigung NLT des Transportwagens 10 an die Neigung NLV der Verladevorrichtung 20 angepasst werden.

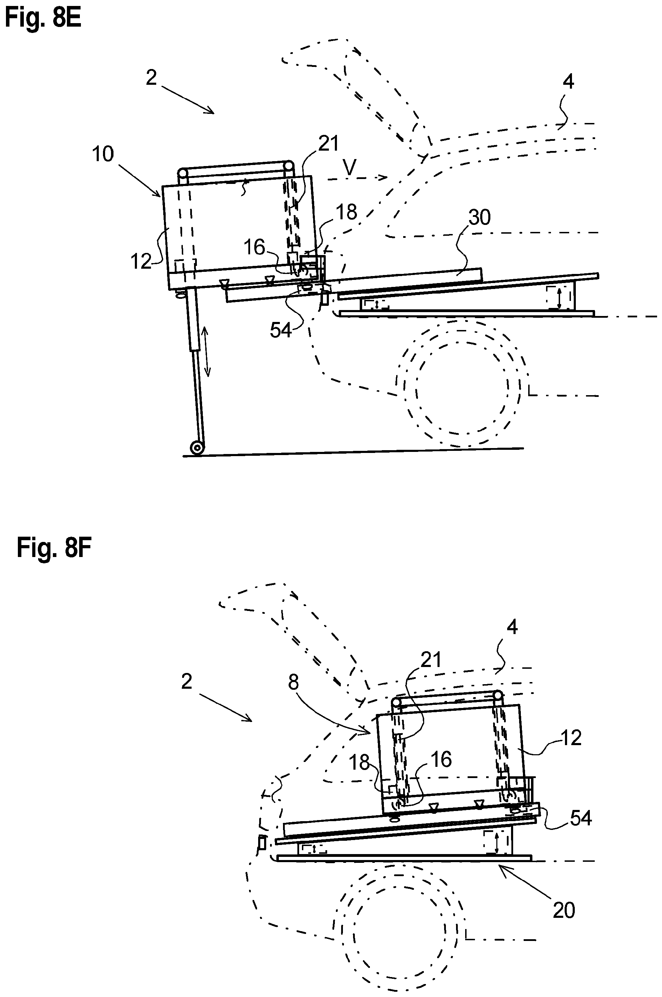

Nach Herstellung der zug- und/oder schubfeste Verbindung können nun die beiden dem Kraftfahrzeug 4 zugewandten Teleskopeinrichtungen 21 in einem vierten Schritt gemäß Figur 8E in eine Auflade-/Abladestellung eingefahren werden, um deren Abrollmittel 16 in Richtung des entsprechenden Teils der Fahrgestellaufnahme 18 zu verlagern. Anschließend kann die Transportaufnahme 12 nun durch motorische Verlagerung des Verladeschlittens 54 in Verladerichtung V über die zug- und/oder schubfeste Verbindung auf das Verladeteil 30 in eine Stützstellung gezogen werden, in der das gesamte Gewicht des Transportwagens 10 vom Verlademechanismus 28 aufgenommen werden kann.

Sobald diese Stützstellung erreicht ist, können anschließend in einem fünften Schritt gemäß Figur 8F auch die dem Kraftfahrzeug 4 abgewandten Teleskopeinrichtungen 21 eingefahren werden, bevor ein Mindestabstand gegenüber dem Kraftfahrzeug 4 unterschritten wird. Dabei werden auch die Abrollmittel 16 dieser vom Kraftfahrzeug 4 abgewandten Teleskopeinrichtungen 21, wie dargestellt, in Richtung der Fahrgestellaufnahme 18 verlagert beziehungsweise in dieser aufgenommen. Zusätzlich zu diesem nacheinander erfolgenden Verlagern der Teleskopeinrichtungen 21 in die Verladestellung zur Verringerung des Kippmoments können beim Verladen eines leeren Transportwagens 10 beziehungsweise eines Transportwagens 10 mit einem geringen Gewicht nach Herstellung der nach oben gesicherten zug- und/oder schubfeste Verbindung auch alle Teleskopeinrichtungen 21 gleichzeitig in die Verladestellung verbracht werden. In jedem Fall wird der Transportwagen 10 hierbei bis in die in Figur 8F dargestellte Endstellung verlagert, in der er vollständig im Laderaum 8 aufgenommen ist.

Bei Erreichen dieser Endstellung kann der Verlademechanismus 28 mittels der Hubelemente 36 wieder an den Laderaumboden 24 angenähert werden und der Verladeschlitten 54 und/oder der Transportwagen 10 zusätzlich gegenüber der Verladevorrichtung 20 beziehungsweise gegenüber dem Kraftfahrzeug 4 fixiert werden (nicht dargestellt). Die Transport- und Verladeanordnung 2 befindet sich somit in einer Fixierstellung, die eine sichere und positionsstabile Beförderung des Transportwagens 10 mit dem Kraftfahrzeug 4 gewährleistet.

Am Transportwagen 10 können dabei zudem elektrische Anschlussmittel vorgesehen sein, die in der Fixierstellung im Laderaum 8 die Anschlussgegenmittel 48 (gemäß Figur 3) des Kraftfahrzeugs 4 kontaktieren, um einen Akkumulator des Transportwagens 10 mittels einer elektrischen Stromversorgungseinheit des Kraftfahrzeuges 4, wie beispielsweise einer Autobatterie und/oder einer Lichtmaschine aufladen zu können (nicht dargestellt).

Unabhängig von der Ausführungsform, kann der im Laderaum 8 aufgenommene Transportwagen 10 später in einem Entladevorgang durch Verlagerung des wenigstens einen Verladeteils 30, 30A, 30B und der dem Kraftfahrzeug 4 abgewandten Teleskopeinrichtungen 21 in die Auflade-/Abladestellung gemäß Figur 8E und anschließendem Ausfahren auch der dem Kraftfahrzeug zugewandten Teleskopeinrichtungen 21 gemäß der Figuren 8D und 8C auch wieder aus dem Kraftfahrzeug 4 ausgeladen werden. Hierbei kann beispielsweise eine Sensorik, wie beispielsweise eine Druck- oder Neigungssensorik vorgesehen sein, mittels der ein Kontakt der, insbesondere gefedert gelagerten, Abrollmittel 16 mit dem Untergrund G erkennbar ist, so dass die betreffenden Teleskopeinrichtungen G in geeigneter Höhe HT des Transportwagens fixierbar sind. Alternativ hierzu können die Abrollmittel 16 auch über die Bedienmittel B, den Transponder TR und/oder das Smartphone S im geeigneten Abstand zur Transportaufnahme 12 fixiert werden.

Zur Trennung des Transportwagens 10 von der Verladevorrichtung wird die Transportaufnahme 12 wieder von der Höhe HT2 auf die Höhe HT1 angehoben, um die Eingriffsmittel 50 der Verladevorrichtung 20 von den Eingriffsgegenmitteln 52 des Transportwagens 10 zu trennen und damit die zug- und/oder schubfeste Verbindung zu lösen.

## Patentansprüche

1. Transport- und Verladeanordnung (2) für ein Kraftfahrzeug (4), wie insbesondere einen PKW, mit einem sich bis zu einer Hecköffnung (6) erstreckenden Laderaum (8),
mit einem Transportwagen (10), der ein Fahrgestell (14) mit mehreren verstellbaren Abrollmitteln (16) und wenigstens eine Transportaufnahme (12) aufweist, wobei die Abrollmittel (16) zwischen einer Transportstellung, in der sie sich an einem Untergrund (G) abstützen, und einer Verladestellung verstellbar sind, in der sie in Richtung der Transportaufnahme (12) verlagert sind, und
mit einer Verladevorrichtung (20) zur Anbringung im Laderaum (8), die einen Verlademechanismus (28) zum Ein- und/oder Ausladen des Transportwagens (10) in den beziehungsweise aus dem Laderaum (8) heraus aufweist,
wobei der Transportwagen (10) am Verlademechanismus (28) in einer Auflade-/Abladestellung aufnehmbar ist, in der zwischen dem Verlademechanismus (28) und dem Transportwagen (10) eine in eine Verladerichtung (V) wirkende zug- und/oder schubfeste Verbindung herstellbar ist und die Abrollmittel (16) teilweise in die Transportstellung und teilweise in die Verladestellung verbringbar sind, in der sie beabstandet vom Untergrund (G) gehalten sind,
**dadurch gekennzeichnet, dass** eine Sensoranordnung (40) vorgesehen ist, die zwischen der Verladevorrichtung (20) und dem Transportwagen (10) wirkt, und in Abhängigkeit von einem Signal der Sensoranordnung (40) die Abrollmittel (16) selbsttätig in die Verladestellung verbringbar sind.

2. Transport- und Verladeanordnung nach Anspruch 1, **dadurch gekennzeichnet, dass** der Verlademechanismus (28) einen teilweise aus dem Laderaum (8) heraus verlagerbaren Verladeteil (30) aufweist, an dem ein wiederum gegenüber dem Verladeteil (30) verlagerbarer Verladeschlitten (54) vorgesehen ist, an dem die zug- und/oder schubfeste Verbindung mit dem Transportwagen (10) herstellbar ist.

3. Transport- und Verladeanordnung nach Anspruch 1 oder 2, **dadurch gekennzeichnet, dass** das Fahrgestell (14) wenigstens zwei Anordnungen der Abrollmittel (16) aufweist, die unabhängig voneinander zwischen der Transportstellung und der Verladestellung verstellbar sind.

4. Transport- und Verladeanordnung nach einem der Ansprüche 1 bis 3, **dadurch gekennzeichnet, dass** die Abrollmittel (16) über wenigstens eine Höhenverstellungseinrichtung (19) zueinander höhenmäßig verstellbar sind.

5. Transport- und Verladeanordnung nach Anspruch 4, **dadurch gekennzeichnet, dass** die Höhenverstellungseinrichtung (19) wenigstens eine Teleskopeinrichtung (21) aufweist.

6. Transport- und Verladeanordnung nach Anspruch 4 oder 5, **dadurch gekennzeichnet, dass** die Höhenverstellungseinrichtung (19) wenigstens einen Scherenhebelantrieb aufweist.

7. Transport- und Verladeanordnung nach einem der Ansprüche 1 bis 6, **dadurch gekennzeichnet, dass** zusätzlich die Verladevorrichtung (20) eine zweite Höhenverstellungseinrichtung (34) aufweist.

8. Transport- und Verladeanordnung nach Anspruch 7, **dadurch gekennzeichnet, dass** mittels der wenigstens einen zweiten Höhenverstellungseinrichtung (34) der Verlademechanismus (28) gegenüber dem Transportwagen (10) selbsttätig ausrichtbar ist.

9. Verfahren zum Betrieb einer Transport- und Verladeanordnung nach einem der Ansprüche 1 bis 8, wenn abhängig von Anspruch 2, wobei zunächst der Transportwagen (10) an die im Laderaum (8) des Kraftfahrzeugs (4) angebrachte Verladevorrichtung (20) angenähert und die Verladevorrichtung (20) teilweise unter der Transportaufnahme (12) des Transportwagens (10) angeordnet wird, und
in nachfolgenden Schritten der Transportwagen (10) an der Verladevorrichtung (20) aufgenommen und mittels des Verlademechanismus (28) in Verladerichtung (V) in den Laderaum (8) verladen wird,
**dadurch gekennzeichnet, dass** beim Aufnehmen des Transportwagens (10) an der Verladevorrichtung (20) der Transportwagen (10) in die Auflade-/Abladestellung verbracht wird, in der er unter Herstellung einer in Verladerichtung (V) wirkenden zug- und/oder schubfesten Verbindung in Gravitationsrichtung (GR) am Verladeteil (30) abgestützt wird und die dem Kraftfahrzeug (4) zugewandten Abrollmittel (16) selbsttätig in die Verladestellung verlagert sind, während die vom Fahrzeug abgewandten Abrollmittel noch immer am Untergrund abgestützt sind.

10. Betriebsverfahren nach Anspruch 9, **dadurch gekennzeichnet, dass** der Transportwagen (10) in der Auflade-/Abladestellung mittels des Verladeschlittens (54) auf das Verladeteil (30) des Verlademechanismus (28) gezogen wird und dabei über die vom Kraftfahrzeug (4) abgewandten Abrollmittel (16) am Untergrund (G) abrollt.

11. Betriebsverfahren nach Anspruch 10, **dadurch gekennzeichnet, dass** nach Erreichen einer Stützstellung, in der das Gewicht der Transportaufnahme (12) vollständig auf dem Verladeteil (30) abgetragen ist und vor Unterschreitung eines Mindestabstandes gegenüber dem Kraftfahrzeug (4) auch die vom Kraftfahrzeug (4) abgewandten Abrollmittel (16) selbsttätig in die Verladestellung verbracht werden.

12. Betriebsverfahren nach einem der Ansprüche 9 bis 11, **dadurch gekennzeichnet, dass** der Transportwagen (10) nach dem Verbringen aller Abrollmittel (16) in die Verladestellung auf dem Verladeteil (30) in eine Fixierstellung im Laderaum (8) verbracht wird, in der er in alle Richtungen positionsstabil gesichert ist.

13. Betriebsverfahren nach einem der Ansprüche 9 bis 12, **dadurch gekennzeichnet, dass** bei einem Entladevorgang des Transportwagens (10) aus dem Laderaum (8) heraus nach Erreichen des Mindestabstandes die vom Kraftfahrzeug (4) abgewandten Abrollmittel (16) selbsttätig in die Transportstellung verbracht werden und der Transportwagen (10) mittels des Verladeschlittens (54) aus dem Laderaum (8) herausgeschoben wird.

14. Betriebsverfahren nach Anspruch 13, **dadurch gekennzeichnet, dass** die vom Kraftfahrzeug (10) abgewandten Abrollmittel (16) beim Aufsetzen auf den Untergrund (G) höhenmäßig gegenüber der Transportaufnahme (12) fixiert werden und der Transportwagen (10) dadurch in die Auflade-/Abladestellung verbracht ist.

## Claims

1. Transport and loading assembly (2) for a motor vehicle (4), such as, in particular, a passenger car, with a loading space (8) extending up to a tailgate (6),
with a transport cart (10), which has a chassis (14) with multiple adjustable rollers (16) and at least one transport receptacle (12), wherein the rollers (16) can be adjusted between a transport position, in which they are supported on a base (G), and a loading position, in which they are displaced in the direction of the transport receptacle (12), and
with a loading device (20) for installation in the loading space (8), which has a loading mechanism (28) for loading and/or unloading the transport cart (10) into or out of the loading space (8),
wherein the transport cart (10) can be received on the loading mechanism (28) in a loading/unloading position, in which a tension-resistant and/or shear-resistant connection acting in a loading direction (V) can be produced between the loading mechanism (28) and the transport cart (10) and the rollers (16) can be partly brought into the transport position and partly into the loading position, in which they are held at a distance from the base (G),
**characterized in that** a sensor arrangement (40) is provided, which acts between the loading device (20) and the transport cart (10), and the rollers (16) can be automatically brought into the loading position as a function of a signal from the sensor arrangement (40).

2. Transport and loading assembly according to claim 1, **characterized in that** the loading mechanism (28) has a loading section (30) that can be partly displaced out of the loading space (8), on which a loading carriage (54) that can in turn be displaced relative to the loading section (30) is provided, on which the tension-resistant and/or shear-resistant connection with the transport cart (10) can be produced.

3. Transport and loading assembly according to claim 1 or 2, **characterized in that** the chassis (14) has at least two arrangements of the rollers (16), which can be adjusted independently of one another between the transport position and the loading position.

4. Transport and loading assembly according to any one of claims 1 to 3, **characterized in that** the rollers (16) can be adjusted in terms of height relative to one another via at least one height adjustment apparatus (19).

5. Transport and loading assembly according to claim 4, **characterized in that** the height adjustment apparatus (19) has at least one telescopic apparatus (21).

6. Transport and loading assembly according to claim 4 or 5, **characterized in that** the height adjustment apparatus (19) has at least one scissor-type lever drive.

7. Transport and loading assembly according to any one of claims 1 to 6, **characterized in that** the loading device (20) also has a second height adjustment apparatus (34).

8. Transport and loading assembly according to claim 7, **characterized in that** the loading mechanism (28) can be automatically aligned relative to the transport cart (10) by means of the at least one second height adjustment apparatus (34).

9. Method for operating a transport and loading assembly according to any one of claims 1 to 8, when as a function of claim 2, wherein
the transport cart (10) is first brought close to the loading device (20) installed in the loading space (8) of the motor vehicle (4) and the loading device (20) is partly arranged below the transport receptacle (12) of the transport cart (10), and
in subsequent steps, the transport cart (10) is received on the loading device (20) and loaded in the loading direction (V) into the loading space (8) by means of the loading mechanism (28),
**characterized in that**, during receipt of the transport cart (10) on the loading device (20), the transport cart (10) is brought into the loading/unloading position, in which it is supported on the loading section (30) in the direction of gravity (GR) by producing a tension-resistant and/or shear-resistant connection acting in a loading direction (V) and the rollers (16) facing the motor vehicle (4) are automatically displaced into the loading position, while the rollers facing away from the motor vehicle are still supported on the base.

10. Operating method according to claim 9, **characterized in that** the transport cart (10) is pulled into the loading/unloading position by means of the loading carriage (54) on the loading section (30) of the loading mechanism (28) and thus rolls over the rollers (16) facing away from the motor vehicle (4) on the base (G).

11. Operating method according to claim 10, **characterized in that** after reaching a support position, in which the weight of the transport receptacle (12) is transferred entirely to the loading section (30) and, before falling below a minimum distance from the motor vehicle (4), the rollers (16) facing away from the motor vehicle (4) are also automatically brought into the loading position.

12. Operating method according to any one of claims 9 to 11, **characterized in that**, after all the rollers (16) have been brought into the loading position on the loading section (30), the transport cart (10) is brought into a fixing position in the loading space (8), in which it is secured in a stable position in all directions.

13. Operating method according to any one of claims 9 to 12, **characterized in that**, during an unloading operation of the transport cart (10) from the loading space (8), after reaching the minimum distance, the rollers (16) facing away from the motor vehicle (4) are automatically brought into the transport position and the transport cart (10) is pushed out of the loading space (8) by means of the loading carriage (54).

14. Operating method according to claim 13, **characterized in that**, during positioning on the base (G), the rollers (16) facing away from the motor vehicle (10) are fixed in terms of height relative to the transport receptacle (12) and the transport cart (10) is thereby brought into the loading/unloading position.

## Revendications

1. Agencement de transport et de chargement (2) pour un véhicule automobile (4), comme en particulier une voiture particulière, avec un espace de chargement (8) s'étendant jusqu'à une ouverture arrière (6),
avec un chariot de transport (10) qui présente un châssis (14) avec plusieurs moyens de roulement (16) réglables et au moins un logement de transport (12), dans lequel les moyens de roulement (16) sont réglables entre une position de transport, dans laquelle ils s'appuient contre un fond (G), et une position de chargement, dans laquelle ils sont déplacés en direction du logement de transport (12) et
avec un dispositif de chargement (20) pour le montage dans l'espace de chargement (8) qui présente un mécanisme de chargement (28) pour charger et/ou décharger le chariot de transport (10) dans ou hors de l'espace de chargement (8),
dans lequel le chariot de transport (10) peut être reçu au niveau du mécanisme de chargement (28) dans une position de chargement/déchargement, dans laquelle entre le mécanisme de chargement (28) et le chariot de transport (10) est établie une liaison résistante à la traction et/ou à la poussée agissant dans un sens de chargement (V) et les moyens de roulement (16) peuvent être amenés partiellement dans la position de transport et partiellement dans la position de chargement, dans laquelle ils sont maintenus à distance du fond (G),
**caractérisé en ce qu'**un agencement de capteurs (40) est prévu, lequel agit entre le dispositif de chargement (20) et le chariot de transport (10), et les moyens de roulement (16) peuvent automatiquement être amenés dans la position de chargement en fonction d'un signal de l'agencement de capteurs (40).

2. Agencement de transport et de chargement selon la revendication 1, **caractérisé en ce que** le mécanisme de chargement (28) présente une partie de chargement (30) partiellement déplaçable hors de l'espace de chargement (8), partie au niveau de laquelle un chariot de chargement (54) déplaçable de nouveau par rapport à la partie de chargement (30) est prévu, chariot au niveau duquel la liaison résistante à la traction et/ou à la poussée avec le chariot de transport (10) peut être établie.

3. Agencement de transport et de chargement selon la revendication 1 ou 2, **caractérisé en ce que** le châssis (14) présente au moins deux agencements des moyens de roulement (16) qui sont réglables indépendamment l'un de l'autre entre la position de transport et la position de chargement.

4. Agencement de transport et de chargement selon l'une quelconque des revendications 1 à 3, **caractérisé en ce que** les moyens de roulement (16) sont réglables en hauteur par le biais d'au moins un dispositif de réglage en hauteur (19) les uns par rapport aux autres.

5. Agencement de transport et de chargement selon la revendication 4, **caractérisé en ce que** le dispositif de réglage en hauteur (19) présente au moins un dispositif télescopique (21).

6. Agencement de transport et de chargement selon la revendication 4 ou 5, **caractérisé en ce que** le dispositif de réglage en hauteur (19) présente au moins un entraînement de leviers croisés.

7. Agencement de transport et de chargement selon l'une quelconque des revendications 1 à 6, **caractérisé en ce que** le dispositif de chargement (20) présente en outre un second dispositif de réglage en hauteur (34).

8. Agencement de transport et de chargement selon la revendication 7, **caractérisé en ce que** le mécanisme de chargement (28) peut être orienté automatiquement par rapport au chariot de transport (10) au moyen de l'au moins un second dispositif de réglage en hauteur (34).

9. Procédé de fonctionnement d'un agencement de transport et de chargement selon l'une quelconque des revendications 1 à 8, lorsqu'elle dépend de la revendication 2, dans lequel
tout d'abord le chariot de transport (10) est approché du dispositif de chargement (20) monté dans l'espace de chargement (8) du véhicule automobile (4) et le dispositif de chargement (20) est partiellement agencé sous le logement de transport (12) du chariot de transport (10) et
dans les étapes suivantes, le chariot de transport (10) est logé au niveau du dispositif de chargement (20) et est chargé au moyen du mécanisme de chargement (28) dans le sens de chargement (V) dans l'espace de chargement (8),
**caractérisé en ce que** lors de la réception du chariot de transport (10) au niveau du dispositif de chargement (20), le chariot de transport (10) est amené dans la position de chargement/déchargement, dans laquelle il est en appui en établissant une liaison résistante à la traction et/ou à la poussée agissant dans le sens de chargement (V) dans le sens de gravitation (GR) contre la partie de chargement (30) et les moyens de roulement (16) tournés vers le véhicule automobile (4) sont logés automatiquement dans la position de chargement, alors que les moyens de roulement éloignés du véhicule sont encore en appui contre le fond.

10. Procédé de fonctionnement selon la revendication 9, **caractérisé en ce que** le chariot de transport (10) est tiré dans la position de chargement/déchargement au moyen du chariot de chargement (54) sur la partie de chargement (30) du mécanisme de chargement (28) et roule sur les moyens de roulement (16) éloignés du véhicule automobile (4) sur le fond (G).

11. Procédé de fonctionnement selon la revendication 10, **caractérisé en ce qu'**après l'atteinte d'une position d'appui, dans laquelle le poids du logement de transport (12) est complètement enlevé sur la partie de chargement (30) et avant la non-atteinte d'une distance minimale par rapport au véhicule automobile (4), les moyens de roulement (16) éloignés du véhicule automobile (4) sont aussi amenés automatiquement dans la position de chargement.

12. Procédé de fonctionnement selon l'une quelconque des revendications 9 à 11, **caractérisé en ce que** le chariot de transport (10) est amené après l'amenée de tous les moyens de roulement (16) dans la position de chargement sur la partie de chargement (30) dans une position de fixation dans l'espace de chargement (8), dans laquelle il est fixé dans tous les sens de manière stable en position.

13. Procédé de fonctionnement selon l'une quelconque des revendications 9 à 12, **caractérisé en ce que** lors d'un processus de déchargement du chariot de transport (10) hors de l'espace de chargement (8) après l'atteinte de la distance minimale, les moyens de roulement (16) éloignés du véhicule automobile (4) sont amenés automatiquement dans la position de transport et le chariot de transport (10) est déplacé au moyen du chariot de chargement (54) hors de l'espace de chargement (8).

14. Procédé de fonctionnement selon la revendication 13, **caractérisé en ce que** les moyens de roulement (16) éloignés du véhicule automobile (10) sont fixés en hauteur lors du placement sur le fond (G) par rapport au logement de transport (12) et le chariot de transport (10) est ainsi amené dans la position de chargement/déchargement.
